# FASCICULE DE BREVET EUROPEEN

(11) **EP 3 197 597 B1**
(45) Date de publication et mention de la délivrance du brevet: **02.10.2019**
(21) Numéro de dépôt: 15766514.2
(22) Date de dépôt: 22.09.2015
(51) Int. Cl.: B01J 23/63, B01D 53/94, B01J 37/02

(54) **MODULE CATALYTIQUE PRESENTANT UNE EFFICACITE AMELIOREE AU VIEILLISSEMENT**
KATALYSATORMODUL MIT VERBESSERTER WIRKSAMKEIT HINSICHTLICH DER ALTERUNG
CATALYTIC MODULE WITH IMPROVED EFFECTIVENESS IN TERMS OF AGEING

(30) Priorité: 24.09.2014 FR 1459025
(43) Date de publication de la demande: 02.08.2017
(73) Titulaire: Commissariat à l'Énergie Atomique et aux Énergies Alternatives, 75015 Paris (FR)
(72) Inventeur: DONET, Sébastien, F-38112 Meaudre (FR); ANGLADE, Christelle, F-38220 Saint-Pierre-de-Mesage (FR); KREBS, Thierry, F-38400 Le Versoud (FR)
(74) Mandataire: Brevalex
(86) Numéro de dépôt international: PCT/EP2015/071663
(87) Numéro de publication internationale: WO 2016/046169

(56) Documents cités:
- WO-A2-2004/091765
- KIMBERLY D. POLLARD ET AL: "Chemical Vapor Deposition of Cerium Oxide Using the Precursors [Ce(hfac) 3 (glyme)]", CHEMISTRY OF MATERIALS, vol. 12, no. 3, 1 mars 2000 (2000-03-01), pages 701-710, XP055159231, ISSN: 0897-4756, DOI: 10.1021/cm990455r

## Description

### DOMAINE TECHNIQUE ET ÉTAT DE LA TECHNIQUE ANTÉRIEURE

La présente invention se rapporte à un module catalytique présentant une efficacité améliorée au vieillissement

Dans le domaine automobile, on utilise des catalyseurs métalliques, par exemple du Rhodium pour réduire les oxydes d'azote NOx, et du Platine et du Palladium pour l'oxydation du CO et des hydrocarbures. Ces catalyseurs sont déposés sur une structure par exemple en nid d'abeille qui est ensuite montée dans la ligne d'échappement.

La structure, par exemple en céramique, est recouverte d'une couche tampon habituellement désignée "washcoat" permettant d'avoir une surface spécifique augmentée, qui est recouverte de matériaux précieux tels que le Pt, le Pd, le Rh.

Le module catalytique est disposé dans la ligne d'échappement et subit des températures très élevées, par exemple supérieure à 600°C, cette température élevée tend à réduire la surface active des catalyseurs et leurs performances sont dégradées. En effet, la température élevée tend à diminuer la dispersion du couple waschcoat et catalyseur par frittage. On constate une augmentation de la taille des particules de catalyseurs du fait d'un phénomène de coalescence comme cela est décrit dans le document D. Dou, O.H. Bailey, SAE Technical Papers Series N° 982594 (1998*).*

En outre, les modules catalytiques mettent en oeuvre des métaux précieux, leur coût est important. Par exemple, les métaux précieux sont déposés en même temps que le washcoat par imprégnation, la quantité de métaux précieux mise en oeuvre est alors importante.

Le document WO 2004/091765 décrit un module catalytique comportant un support recouvert d'une couche de cérine déposée par dépôt chimique en phase vapeur et une couche comportant au moins un métal parmi le Pt, le Pd et le Rh réalisée par imprégnation ou dépôt.

### EXPOSÉ DE L'INVENTION

C'est par conséquent un but de la présente invention d'offrir un module catalytique performant présentant une efficacité améliorée lors du vieillissement par rapport aux modules existants.

C'est un but supplémentaire de la présente invention d'offrir un module pour lequel la quantité de métaux précieux mise en oeuvre lors de sa réalisation est moindre par rapport aux modules de l'état de la technique mais présentant au moins une efficacité similaire.

Le but énoncé ci-dessus est atteint par un module catalytique comportant un support, au moins une couche comportant de la cérine, la couche étant déposée par dépôt chimique en phase vapeur (ou CVD pour Chemical Vapor Deposition en anglais) et au moins une couche de métal précieux ou de métaux précieux formant le catalyseur, ladite couche de catalyseur étant déposée par CVD.

Les inventeurs ont détecté qu'en déposant à la fois la couche comportant de la cérine par CVD et la couche de catalyseur par CVD, il y avait apparition de liaisons fortes entre la cérine et le ou les particules de métaux précieux, ce qui avait pour effet de réduire l'effet de coalescence à haute température, en réduisant cette coalescence, la surface réactive de la couche de catalyseur reste importante et l'efficacité du module reste bonne malgré le vieillissement.

L'efficacité du module est déterminée en mesurant la température du module à laquelle la moitié du polluant à traiter a disparu, par exemple du CO, à la fois pour un module neuf et pour un module vieilli.

Les modules de l'invention ont des températures comparables à celles des modules de l'état de la technique et ceci en mettant en oeuvre une quantité substantiellement réduite de métaux précieux lors de leur réalisation. Ceci est rendu possible grâce à la mise en oeuvre d'une couche formée par CVD contenant de la cérine comme support de la couche du métal précieux ou des métaux précieux formée également par CVD.

Dans un exemple avantageux, une couche tampon, également appelée "washcoat", est interposée entre le support et la couche contenant de la résine, ce washcoat ayant pour effet d'augmenter la surface de réaction de la couche catalytique.

Dans un mode particulièrement avantageux, la couche contenant la cérine forme le washcoat qui est donc déposé par un dépôt chimique en phase vapeur et non par imprégnation liquide. Le nombre de couches est alors réduit. En outre, toutes les couches sont réalisées par CVD réduisant la complexité de réalisation du module.

La couche contenant de la cérine peut également comporter de la zircone ou de la zircone yttriée présentant l'avantage de former un écran thermique pour le washcoat.

De manière avantageuse, une couche supplémentaire contenant de la cérine peut être formée sur la couche de catalyseur assurant une encapsulation du catalyseur.

De manière très avantageuse, la structure est réalisée au moins en partie par dépôt chimique en phase vapeur, ce qui permet de réduire la quantité de matière première utilisée, notamment les métaux précieux. Le coût de fabrication est alors réduit tout en offrant une efficacité comparable.

La présente invention a alors pour objet un module catalytique comportant un support solide, et un empilement comportant au moins les couches suivantes, disposées dans l'ordre suivant à partir du support solide : une première couche poreuse contenant du CeO₂ et déposée par dépôt chimique en phase vapeur, une première couche catalytique contenant un ou plusieurs métaux et/ou un ou plusieurs alliages de métaux parmi Pt, Pd, Rh, ladite première couche catalytique (8) étant déposée par dépôt chimique en phase vapeur.

La première couche contenant du CeO2 est discontinue et comporte des ilots, dont la taille est avantageusement comprise entre quelques nm et 100 nm.

Le module catalytique peut comporter une deuxième couche poreuse contenant du CeO₂ formée sur la première couche catalytique. Ce module catalytique peut avantageusement comporter une deuxième couche catalytique formée sur la deuxième couche poreuse contenant du CeO₂.

Selon une caractéristique additionnelle, le module catalytique peut comporter une couche tampon comportant un ou plusieurs oxydes de métal, dite "washcoat" entre le support solide et la première couche poreuse contenant du CeO₂.

La couche tampon comporte par exemple un ou plusieurs oxydes mixtes de natures différentes, tels que Al₂O₃, CeO₂-ZrO₂, BaO₂, zéolithe, TiO₂ / V₂O₅.

Dans un exemple de réalisation, la première couche poreuse contenant du CeO₂ peut former le waschcoat.

Dans un exemple de réalisation, la première et/ou la deuxième couche poreuse contenant du CeO₂ comporte principalement du CeO₂.

Dans un autre exemple de réalisation, la première et/ou la deuxième couche poreuse contenant du CeO₂ comporte également de la zircone

Dans un autre exemple de réalisation, la première et/ou la deuxième couche poreuse contenant du CeO₂ comporte également de la zircone yttriée.

Le support solide peut être un support macroporeux, par exemple un mousse ou une structure en nid d'abeille, le support solide étant par exemple en céramique, par exemple en mullite ou en cordiérite, ou en métal.

La présente invention a également pout objet un procédé de réalisation d'un module catalytique selon l'invention, comportant les étapes de formation sur le support solide :
a) d'une première couche poreuse contenant du CeO₂ par dépôt chimique en phase vapeur,
b) d'une première couche catalytique par dépôt chimique en phase vapeur.

De préférence, les étapes a) et/ou b) sont réalisés par MOCVD.

Le procédé peut comporter une étape de formation d'une couche tampon comportant un ou plusieurs oxydes de métal préalable à l'étape a), par exemple par imprégnation par voie liquide.

Selon une caractéristique additionnelle, le procédé peut comporter une étape c) de formation d'une deuxième couche contenant du CeO₂ sur la première couche catalytique

Selon une caractéristique additionnelle, le procédé peut comporter une étape d) la formation d'une deuxième couche catalytique sur la deuxième couche contenant du CeO₂.

Selon une caractéristique additionnelle, le procédé comporte une étape de traitement thermique après l'étape b) pour favoriser l'apparition de liaisons fortes entre le CeO₂ et les métaux précieux

### BRÈVE DESCRIPTION DES DESSINS

La présente invention sera mieux comprise sur la base de la description qui va suivre et des dessins en annexe sur lesquels:
- la figure 1 est une représentation schématique d'une vue en coupe d'un module catalytique selon un premier mode de réalisation,
- la figure 2 est une représentation schématique d'une vue en coupe d'un premier exemple d'un module catalytique selon un deuxième mode de réalisation,
- la figure 3 est une représentation schématique d'une vue en coupe d'un deuxième exemple d'un module catalytique selon un deuxième mode de réalisation,
- la figure 4 est une représentation schématique d'une vue en coupe d'un troisième exemple d'un module catalytique selon un deuxième mode de réalisation,
- la figure 5 est une représentation graphique de l'évolution de la teneur en CO (en ppm) du mélange gazeux à traiter en fonction de la température du module catalytique pour un module catalytique de la figure 2 frais et vieilli et un module catalytique de l'état de la technique frais et vieilli,

### EXPOSÉ DÉTAILLÉ DE MODES DE RÉALISATION PARTICULIERS

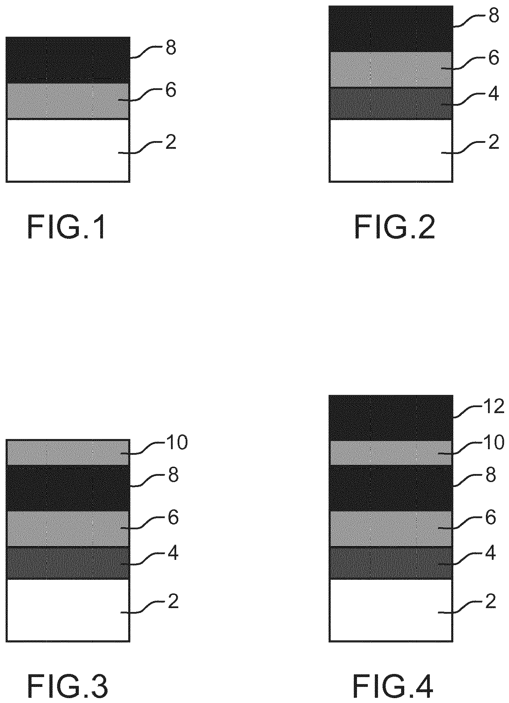

Sur la figure 1, on peut voir une représentation schématique d'une vue en coupe d'une zone d'un module catalytique selon un premier mode de réalisation de l'invention.

Le module comporte une structure support solide 2.

La structure support est avantageusement macroporeuse.

Par "structure support macroporeuse", on entend par exemple des mousses telles que des mousses céramiques d'une porosité de quelques ppi à plusieurs dizaines de ppi (pores par inch), et/ou des supports à structure en nids d'abeilles de quelques cpsi (canaux par pouce carré) à plusieurs centaines de cpsi. Le support solide peut être constitué par un matériau choisi parmi les céramiques, par exemple en cordiérite, en mullite ; les métaux et alliages métalliques tels que l'acier ou le FeCrAl ; les polymères ; les zéolithes ; le silicium ; le verre ; les tissus ; et les matériaux composites comprenant plusieurs des matériaux précités.

Dans le mode représenté et de manière avantageuse, le module comporte également au moins une couche contenant de la cérine 6 et une couche de catalyseurs 8.

La couche 6 peut être formée de cérine, de cérine et de zircone, de cérine et de zircone-yttriée par exemple dans des rapports 50/50 ou 50/80. La couche 6 est poreuse. La zircone-yttriée peut par exemple être dopée entre 5% et 30%.

La couche 6 contenant la cérine est formée sur la structure support par dépôt chimique en phase vapeur, de préférence par dépôt chimique en phase vapeur d'organométalliques (« *OMCVD* » ou « *Organometallic Chemical Vapour Déposition* » en anglais. Par exemple, la couche de cérine est obtenue par DLI-MOCVD en utilisant le précurseur Ce(AcAc)2 dilué dans de l'ortho-xylène, selon une technique bien connue de l'homme du métier. La couche de cérine ainsi formée peut être continue ou discontinue, la couche de cérine étant fine, par exemple elle a une épaisseur comprise entre 50nm et 100nm), elle est sensible à l'état de surface de la couche support sur laquelle elle est formée. Si la couche support présente une hétérogénéité, la couche de cérine peut alors être discontinue.

La couche de cérine déposée par CVD, qui est discontinue, forme des ilots dispersés, sur lesquels sont déposés le ou les métaux précieux, parmi le platine, le palladium ou le rhodium par exemple et/ou une combinaison de ces métaux. La taille des ilots de cérine est avantageusement comprise entre quelques nm à 100 nm.

Le dépôt par CVD permet une imprégnation efficace de la structure support qui présente une macroporosité et conduit au dépôt de couches homogènes du point de vue de l'épaisseur et de la structure.

La couche de catalyseur 8 comporte un ou plusieurs métaux précieux parmi le platine, le palladium ou le rhodium par exemple et/ou une combinaison de ces métaux.

La composition de la couche catalytique dépend de l'application souhaitée.

A titre d'exemple, dans le cas d'une application à une dépollution des gaz d'échappement des moteurs diesel contenant du monoxyde de carbone CO et des hydrocarbures imbrûlés, la couche catalytique est du type PtPdM, M étant choisi parmi Sr, Cu, Fe...

Dans le cas d'une application à une dépollution par oxydoréduction des gaz d'échappement des moteurs essence contenant du monoxyde de carbone CO, des hydrocarbures imbrûlés et des NOx, la couche catalytique est du type PtRhM, M étant choisi parmi Sr, Cu, Fe...

Dans le cas d'une application à une dépollution par réduction des NOx, la couche catalytique est du type PtPdRhM, M étant choisi parmi Sr, Cu, Fe...

La couche catalytique est formée par dépôt chimique en phase vapeur, avantageusement par dépôt chimique en phase vapeur d'organométalliques

Les précurseurs majoritairement utilisés sont des beta-dicetones. Ainsi, le Pt(acac) est dissous par exemple dans le toluène, le Pd(acac) est dissous par exemple dans le toluène et Rh(acac) est dissous par exemple dans le toluène.

La couche catalytique est formée de particules distribuées sur la couche de cérine 6 formant une couche discontinue sous forme d'ilots et poreuse présentant une grande surface réactive.

Les inventeurs ont constaté que la couche 6, en particulier la cérine, déposée par CVD formait des liaisons fortes avec les particules du ou des métaux précieux déposés par CVD. Ces liaisons fortes permettent de limiter, voire d'éviter, la coalescence des particules de métaux précieux, limitant la diminution de l'efficacité du module catalytique. Ces liaisons sont connues sous le nom de Strong Metal Support Interaction ou SMSI en terminologie anglo-saxonne.

De manière avantageuse, la couche 6 peut former le washcoat, par exemple elle peut être formée de composés d'oxydes mixtes Ce_{X}Zr_{1-X}O₂, par exemple de CeO₂-ZrO₂.

La couche 6 peut donc remplir la fonction de washcoat et offre une surface spécifique importante augmentant la surface réactive de la couche catalytique.

Dans un autre mode de réalisation représenté sur la figure 2, le module comporte un washcoat distinct 4 qui peut par exemple un ou plusieurs oxydes mixtes de natures différentes, tels que Al₂O₃, des composés d'oxydes mixtes Ce_{X}Zr_{1-X}O₂, par exemple CeO₂-ZrO₂, BaO₂, zéolithe, TiO₂ / V₂O₅... de sorte à augmenter la surface spécifique de la pièce. Le washcoat 4 est par exemple réalisé par imprégnation en phase liquide.

Sur la figure 2, la couche 6 contenant de la cérine est déposée par CVD sur le washcoat.

La couche 6 peut avoir la même composition que celle décrite en relation avec la figure 1. Dans ce mode de réalisation, une couche 6 contenant de la zircone ou zircone-yttriée est particulièrement avantageuse, car la couche 6 forme un écran thermique pour le washcoat et permet à celui-ci de conserver sa surface spécifique importante. Chacune des couches a par exemple une épaisseur comprise entre 10 nm et 100 nm.

La structure support a par exemple une épaisseur de 1000 µm, le washcoat a une épaisseur de 10 µm, la couche 6 a une épaisseur de 50 nm et la couche catalytique a une épaisseur de 10 nm.

La couche catalytique est formée de particules distribuées sur la couche de liaison 6 formant une couche discontinue et poreuse présentant une grande surface réactive, augmentée du fait de la surface spécifique du washcoat.

Sur la figure 3, on peut voir un autre exemple de réalisation d'un module catalytique comportant une hétérostructure comprenant par rapport à la structure de la figure 2, une couche 10 contenant de la cérine sur la couche catalytique 8. Cette couche forme une couche d'encapsulation pour les métaux précieux. Cette couche 10 est de préférence réalisée par CVD.

La couche 10 peut avoir la même composition que la couche 6 ou une composition différente. La couche 10 est poreuse permettant l'accès à la couche catalytique par les gaz à traiter. La présence de zircone ou zircone-yttriée dans la couche 10 permet à la couche 10 de former un écran thermique. Le catalyseur est alors plus stable et résiste mieux thermiquement.

Par exemple les couches 2, 4, 6, 8 présentent les mêmes épaisseurs que celles des couches du module de la figure 1 et la couche 10 a par exemple une épaisseur de 50 nm.

Sur la figure 4, on peut voir un autre exemple de réalisation d'un module catalytique particulièrement avantageux comportant une hétérostructure comprenant une deuxième couche catalytique 12 sur la couche 10 contenant de la cérine. Dans ce cas la couche 10 et le couche 12 sont de préférence toutes deux réalisées par CVD, des liaisons fortes apparaissent alors entre les couches 10 et 12. Cette réalisation permet d'augmenter la densité de métaux précieux pour une taille de structure support donnée. Cet exemple de réalisation est notamment très avantageux dans une application à la dépollution des moteurs fonctionnant au gaz naturel pour éliminer le méthane.

La composition de la deuxième couche catalytique 12 peut être identique ou différente de celle de la première couche catalytique 6.

Par exemple les couches 2, 4, 6, 8, 10 présentent les mêmes épaisseurs que celles des couches du module de la figure 1 et la couche catalytique 12 a par exemple une épaisseur de 10 nm.

Dans les exemples donnés, les deux couches 6, 10 ont la même épaisseur et les couches catalytiques 8, 12 ont les mêmes épaisseurs, mais ceci n'est en aucun cas limitatif.

Il sera compris que le nombre de couches contenant de la cérine et le nombre de couches catalytiques ne sont pas limités à deux.

La couche de YSZ peut être déposée par MOCVD à partir d'une solution chimique contenant de 5 à 30% massique de Y(acac) mélangé à Zr(acac) dans du Xylène.

Par ailleurs, un empilement comportant une ou plusieurs couches entre la structure poreuse et le washcoat réalisé par CVD ou par imprégnation en phase liquide ne sort pas du cadre de la présente invention.

Un procédé de réalisation d'un module catalytique de la figure 2 va maintenant être décrit.

Lors d'une première étape la structure support est réalisée par extrusion d'une pâte céramique puis mise en forme selon les techniques habituelles de l'homme du métier.

Lors d'une étape suivante, le washcoat 4 est formé sur la structure support par exemple par une technique d'imprégnation par laquelle les précurseurs sont forcés à s'écouler à travers la pièce sous forme liquide.

Alternativement, le washcoat peut être réalisé par dépôt chimique en phase vapeur d'organométalliques (« *OMCVD* » ou « *Organometallic Chemical Vapour Déposition* » en anglais). Comme mentionné ci-dessus, le washcoat peut comporter par exemple un ou plusieurs oxydes mixtes de natures différentes, tels que Al₂O₃, CeO₂-ZrO₂, BaO₂, zéolithe, TiO₂ / V₂O₅.

Lors d'une étape suivante, on réalise la couche contenant de la cérine, par exemple par CVD, très avantageusement par DLI-MOCVD (Direct Liquid Metal Organic Chemical Vapor Deposition en terminologie anglo-saxonne).

Lors d'une étape suivante, on forme la couche catalytique par CVD, avantageusement par de dépôt chimique en phase vapeur d'organométalliques.

Dans la réalisation de pièces dont une partie de la surface est recouverte d'un ou de plusieurs catalyseurs pour le traitement des gaz d'échappement, les précurseurs majoritairement utilisés sont des beta-dicetones. Ainsi, le Pt(acac), le Pd(acac) et le Rh(acac) sont dissous par exemple dans le toluène.

Dans le cas d'une couche catalytique du type PtPdM, M étant choisi parmi Sr, Cu, Fe... Sr, Cu, Fe sont introduits par exemple en co-élution dans la solution avec les catalyseurs avec des béta-dicétonates de Sr, de Cu, de Fe.

Le ou les précurseurs sous forme liquide sont vaporisés et injectés dans l'enceinte de MOCVD dans laquelle la structure support est recouverte du washcoat et de la couche contenant la cérine.

Ensuite un traitement thermique a avantageusement lieu pour favoriser l'apparition de liaisons fortes ente la cérine et les métaux précieux. Par exemple, le traitement thermique a lieu sous air, pendant 1 à 4 heures, par exemple 2 heures entre 500 et 800°C.

La réalisation des différentes couches par CVD présente l'avantage de pouvoir réaliser toutes les couches du module dans la même enceinte de MOCVD.

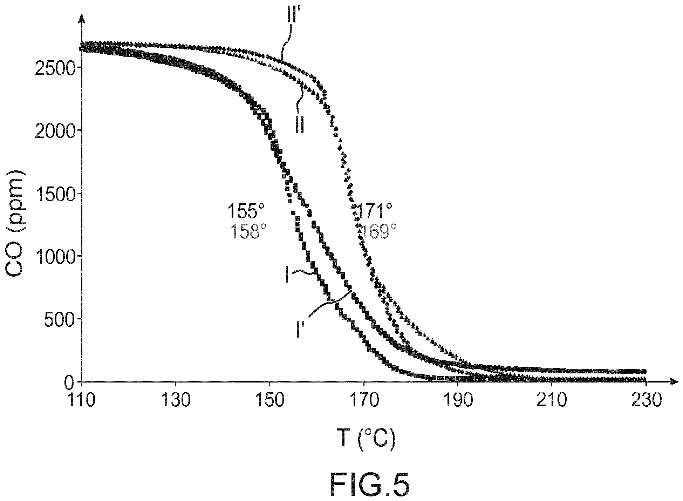

En outre, la réalisation par dépôt chimique en phase vapeur permet un gain en masse de métaux précieux mis en oeuvre dans le procédé de réalisation important tout en conservant sensiblement la même efficacité comme l'illustre la courbe de la figure 5 qui représente la courbe de light off du CO, i.e. l'évolution de la teneur en CO (en ppm) du mélange gazeux à traiter en fonction de la température du module catalytique.

Par ailleurs, le dépôt par DLI-MOCVD de la couche contenant de la cérine conduit à une diminution des contraintes intrinsèques et aux interfaces.

On peut ainsi réduire les contraintes au sein de l'hétérostructure via l'adaptation des paramètres de maille et des coefficients de dilatation grâce à la réalisation de multicouches cristallographiquement orientées et avoir une meilleure densification de l'empilement par accord des paramètres de maille et de dilatation thermique.

Le contrôle des paramètres du procédé de dépôt permet de moduler la morphologie des grains, la structure cristallographique des matériaux déposés ainsi que leur dispersion.

Les courbes I et II correspondent au module M2 neuf et vieilli de la figure 2 mettant en oeuvre 0,92 g/l (26g/ft³) de métaux précieux lors de sa réalisation

Les courbes I' et II' correspondent à un module catalytique M1 de l'état de la technique neuf et vieilli respectivement comportant un washcoat et des particules de métaux précieux, dans lequel les particules de métaux précieux sont noyées est déposée par imprégnation, et mettant en oeuvre 3 g/l (85g/ft³) de métaux précieux lors de sa réalisation.

Pour un module neuf, la réduction de 50% de la teneur de CO contenu initialement dans le mélange gazeux est atteinte pour une température de 155°C pour le module M2 et 158°C pour le module M1 tandis que pour un module vieilli cette réduction est atteinte à 171°C pour le module M2 et 168°C pour le module M1. La précision étant de +/- 3°C, on constate donc que les deux modules ont sensiblement la même efficacité. Grâce à l'invention et à la mise en oeuvre de la couche contenant de la cérine, tout en réduisant de manière importante la quantité de métaux précieux mise en oeuvre dans le procédé, l'efficacité est sensiblement maintenue. La masse de métaux précieux peut donc être réduite par 3 environ sans nuire à l'efficacité.

Dans le tableau ci-dessous sont rassemblées les températures pour une élimination de 50% du CO pour des modules neufs et vieillis.

| **Module** | **T°(C) pour module neuf** | **T°(C) pour module vieilli** |
|---|---|---|
| M1 | 158 | 169 |
| M2 | 155 | 171 |
| M3 | 160 | 179 |
| M4 | 178 | 188 |
| M5 | 150-149 | 183 |
| M6 | 131-145 | 182 |
| M7 | 144 | 171 |

M3 correspond au module de la figure 2, la couche 6 comportant 80% de cérine et 20% de zircone et la couche 8 comportant du Pt et du Pd.

M4 correspond au module de la figure 2, la couche 6 comportant 50% de cérine et 50% de zircone et la couche 8 comportant du Pt et du Pd.

M5 correspond au module de la figure 3, les couches 6 et 10 étant de la cérine et la couche 8 comportant du Pt et du Pd.

M7 correspond au module de la figure 3, les couches 6 et 10 comportant 80% de cérine et 20% de zircone et la couche 8 comportant du Pt et du Pd.

M6 correspond au module de la figure 4, les couches 6 et 10 étant de la cérine et les couches catalytiques 8 et 12 étant du Pt et du Pd.

M7 correspond au module de la figure 2 réalisé par CVD chargé à 1,25 g/l (35g/ft³) de métaux précieux.

Un écart de 10°C au plus par rapport aux températures de M1 est jugé comme acceptable.

On constate de manière générale que les températures à 50% de CO pour les modules vieillis selon l'invention sont de l'ordre de 10°C supérieure à celle de M1. Mais les modules de l'invention ont été fabriqués avec 0,92 g/l (26 g/ft³) de métaux précieux alors que le module de l'état de la technique a été fabriqué avec 3 g/l (85 g/ft³)de métaux précieux et offrent des températures similaires. Les modules vieillis présentent des températures de l'ordre de 180°C qui sont acceptables. La présence de la couche contenant de la cérine réduit la coalescence et permet de conserver l'efficacité du module dans le temps pour une quantité de métaux précieux réduite par rapport à l'état de la technique.

On constate pour le module M7 par rapport au module M2 que l'augmentation de la quantité de matériaux précieux lors du procédé de réalisation ((1,23 g/l 35 g/ft³ au lieu de 0,92 g/l (26g/ft³)) permet de réduite la température pour un module neuf 141°C au lieu de 155°C.

En outre, on voit que les modules M5, M6 et M7 neufs présentent une température pour 50% d'élimination de CO basses par rapport au module M1 de l'état de la technique, ce qui est très favorable pour maintenir l'efficacité des modules et pour un démarrage rapide de la dépollution.

Le module selon l'invention est particulièrement adapté à la réalisation de modules de dépollution pour l'automobile pour l'élimination, du CO, NOx et des suies, à des modules de traitement de l'air, par exemple pour le traitement des COV et des NOx, pour la réalisation de modules pour la production d'hydrogène par reformage et pour la réalisation de modules de stockage de l'hydrogène.

## Revendications

1. Module catalytique comportant:
- un support solide (2), et
- un empilement comportant au moins les couches suivantes, disposées dans l'ordre suivant à partir du support solide:
- une première couche poreuse (6) contenant du CeO₂ et déposée par dépôt chimique en phase vapeur,
- une première couche catalytique (8) contenant un ou plusieurs métaux et/ou un ou plusieurs alliages de métaux parmi Pt, Pd, Rh, ladite première couche catalytique (8) étant déposée par dépôt chimique en phase vapeur.

2. Module catalytique selon la revendication 1, dans lequel la première couche contenant du CeO2 est discontinue et comporte des ilots, dont la taille est avantageusement comprise entre quelques nm et 100 nm.

3. Module catalytique selon la revendication 1 ou 2, comportant une deuxième couche poreuse (10) contenant du CeO₂ formée sur la première couche catalytique.

4. Module catalytique selon la revendication 3, comportant une deuxième couche catalytique (12) formée sur la deuxième couche poreuse (10) contenant du CeO₂.

5. Module catalytique selon l'une des revendications 1 à 4, comportant une couche tampon (4) comportant un ou plusieurs oxydes de métal, dite "washcoat" entre le support solide (2) et la première couche poreuse (6) contenant du CeO₂, la couche tampon comportant avantageusement un ou plusieurs oxydes mixtes de natures différentes, tels que Al₂O₃, CeO₂-ZrO₂, BaO₂, zéolithe, TiO₂ / V₂O₅.

6. Module catalytique selon l'une des revendications 1 à 4, dans lequel la première couche poreuse (6) contenant du CeO₂ forme une couche tampon.

7. Module catalytique selon l'une des revendications 1 à 6, dans lequel la première (6) et/ou la deuxième couche poreuse (10) contenant du CeO₂ comporte principalement du CeO₂.

8. Module catalytique selon l'une des revendications 1 à 6, dans lequel la première et/ou la deuxième couche poreuse contenant du CeO₂ comporte(nt) également de la zircone.

9. Module catalytique selon l'une des revendications 1 à 6, dans lequel la première et/ou la deuxième couche poreuse contenant du CeO₂ comporte(nt) également de la zircone yttriée.

10. Module catalytique selon l'une des revendications 1 à 9, dans lequel le support solide est un support macroporeux, par exemple un mousse ou une structure en nid d'abeille, le support solide étant par exemple en céramique, par exemple en mullite ou en cordiérite, ou en métal.

11. Procédé de réalisation d'un module catalytique selon l'une des revendications 1 à 10, comportant les étapes de formation sur le support solide :
a) d'une première couche poreuse contenant du CeO₂ par dépôt chimique en phase vapeur,
b) d'une première couche catalytique par dépôt chimique en phase vapeur.

12. Procédé de réalisation selon la revendication 11, dans lequel les étapes a) et/ou b) sont réalisés par MOCVD.

13. Procédé de réalisation selon la revendication 11 ou 12, comportant une étape de formation d'une couche tampon comportant un ou plusieurs oxydes de métal préalable à l'étape a), par exemple par imprégnation par voie liquide.

14. Procédé de réalisation selon l'une des revendications 11 à 13, comportant une étape c) de formation d'une deuxième couche contenant du CeO₂ sur la première couche catalytique, et avantageusement une étape d) de formation d'une deuxième couche catalytique sur la deuxième couche contenant du CeO₂.

15. Procédé de réalisation selon l'une des revendications 11 à 14, comportant une étape de traitement thermique après l'étape b) pour favoriser l'apparition de liaisons fortes entre le CeO₂ et les métaux précieux.

## Patentansprüche

1. Katalysatormodul, enthaltend
- einen festen Träger (2) und
- eine Stapelung, die zumindest die folgenden Schichten enthält, die in der folgenden Reihenfolge ausgehend vom festen Träger angeordnet sind:
- eine erste poröse Schicht (6), die CeO₂ enthält und durch chemische Dampfabscheidung abgeschieden ist,
- eine erste katalytische Schicht (8), die ein oder mehrere Metalle und/oder eine oder mehrere Metalllegierungen aus Pt, Pd, Rh enthält, wobei die erste katalytische Schicht (8) durch chemische Dampfabscheidung abgeschieden ist.

2. Katalysatormodul nach Anspruch 1, wobei die CeO₂-haltige erste Schicht diskontinuierlich ist und Inseln enthält, deren Größe vorteilhaft zwischen einigen nm und 100 nm liegt.

3. Katalysatormodul nach Anspruch 1 oder 2, enthaltend eine zweite CeO₂-haltige poröse Schicht (10), die auf der ersten katalytischen Schicht gebildet ist.

4. Katalysatormodul nach Anspruch 3, enthaltend eine zweite katalytische Schicht (12), die auf der zweiten CeO₂-haltigen porösen Schicht (10) gebildet ist.

5. Katalysatormodul nach einem der Ansprüche 1 bis 4, enthaltend eine Pufferschicht (4) mit einem oder mehreren Metalloxiden, "Washcoat" genannt, zwischen dem festen Träger (2) und der ersten CeO₂-haltigen porösen Schicht (6), wobei die Pufferschicht vorteilhaft eine oder mehrere Mischoxide verschiedener Beschaffenheiten, wie etwa Al₂O₃, CeO₂, ZrO₂, BaO₂, Zeolith, TiO₂ / V₂O₅, enthält.

6. Katalysatormodul nach einem der Ansprüche 1 bis 4, wobei die erste CeO₂-haltige poröse Schicht (6) eine Pufferschicht bildet.

7. Katalysatormodul nach einem der Ansprüche 1 bis 6, wobei die erste (6) und/oder die zweite (10) CeO₂-haltige poröse Schicht hauptsächlich CeO₂ enthält.

8. Katalysatormodul nach einem der Ansprüche 1 bis 6, wobei die erste und/oder die zweite CeO₂-haltige poröse Schicht auch Zirkoniumoxid enthält.

9. Katalysatormodul nach einem der Ansprüche 1 bis 6, wobei die erste und/oder die zweite CeO₂-haltige poröse Schicht auch Yttrium-stabilisiertes Zirkoniumoxid enthält.

10. Katalysatormodul nach einem der Ansprüche 1 bis 9, wobei der feste Träger ein makroporöser Träger, beispielsweise ein Schaum oder eine Wabenstruktur, ist, wobei der feste Träger beispielsweise aus Keramik, beispielsweise aus Mullit oder Cordierit, oder aus Metall besteht.

11. Verfahren zum Herstellen eines Katalysatormoduls nach einem der Ansprüche 1 bis 10, umfassend die Schritte zum Bilden auf dem festen Träger:
a) einer ersten porösen Schicht, die CeO₂ enthält, durch chemische Dampfabscheidung,
b) einer ersten katalytischen Schicht durch chemische Dampfabscheidung.

12. Herstellungsverfahren nach Anspruch 11, wobei die Schritte a) und/oder b) durch MOCVD erfolgen.

13. Herstellungsverfahren nach Anspruch 11 oder 12, umfassend einen Schritt des Bildens einer Pufferschicht, die ein oder mehrere Metalloxide enthält, vor dem Schritt a), beispielsweise durch Flüssigimprägnierung.

14. Herstellungsverfahren nach einem der Ansprüche 11 bis 13, umfassend einen Schritt c) des Bildens einer zweiten CeO₂-haltigen Schicht auf der ersten katalytischen Schicht und vorteilhaft umfassend einen Schritt d) des Bildens einer zweiten katalytischen Schicht auf der zweiten CeO₂-haltigen Schicht.

15. Herstellungsverfahren nach einem der Ansprüche 11 bis 14, umfassend einen Schritt der Wärmebehandlung nach Schritt b), um das Entstehen von starken Bindungen zwischen CeO₂ und Edelmetallen zu fördern.

## Claims

1. Catalytic module comprising:
- a solid support (2), and
- a stack comprising at least the following layers arranged in the following order, starting from the solid support:
- a first porous layer (6) containing CeO₂ and deposited by chemical vapour deposition,
- a first catalytic layer (8) containing one or several metals and/or one or several alloys of metals among Pt, Pd, Rh, said first catalytic layer (8) being deposited by chemical vapour deposition,

2. Catalytic module according to claim 1, in which the first layer containing CeO2 is discontinuous and comprises islands with a size preferably between a few nm and 100 nm.

3. Catalytic module according to claim 1 or 2, comprising a second porous layer (10) containing CeO₂ formed on the first catalytic layer.

4. Catalytic module according to claim 3, comprising a second catalytic layer (12) formed on the second porous layer (10) containing CeO₂.

5. Catalytic module according to one of claims 1 to 4, comprising a buffer layer (4), called "washcoat", containing one or several metal oxides between the solid support (2) and the first porous layer (6) containing CeO₂, the buffer layer advantageously comprising one or several mixed oxides of different natures such as Al₂O₃, CeO₂-ZrO₂, BaO₂, zeolite, TiO₂ / V₂O₅.

6. Catalytic module according to one of claims 1 to 4, in which the first porous layer (6) containing CeO₂ forms a buffer layer.

7. Catalytic module according to one of claims 1 to 6, in which the first (6) and/or the second (10) porous layer containing CeO₂ comprises mainly CeO₂

8. Catalytic module according to one of claims 1 to 6, in which the first and/or the second porous layer containing CeO₂ also comprises zirconia.

9. Catalytic module according to one of claims 1 to 6, in which the first and/or the second porous layer containing CeO₂ also comprises yttriated zirconia.

10. Catalytic module according to one of claims 1 to 9, in which the solid support is a macroporous support, for example a foam or a honeycomb structure, the solid support for example being made of ceramic, for example mullite or cordierite, or a metal.

11. Method of manufacturing a catalytic module according to one of claims 1 to 10, comprising steps to form the solid support:
a) a first porous layer containing CeO₂ formed by chemical vapour deposition,
b) a first catalytic layer formed by chemical vapour deposition.

12. Manufacturing method according to claim 11, in which steps a) and/or b) are done by MOCVD.

13. Manufacturing method according to claim 11 or 12, comprising a step in which a buffer layer containing one or several metal oxides is formed prior to step a), for example by liquid impregnation.

14. Manufacturing method according to one of claims 11 to 13, comprising a step c) in which a second layer containing CeO₂ is formed on the first catalytic layer, and advantageously comprising a step d) in which a second catalytic layer is formed on the second layer containing CeO₂.

15. Manufacturing method according to one of claims 11 to 14, comprising a heat treatment step after step b) conducting to the development of strong bonds between the ceria and the precious metals.
